**Europäisches Patentamt**

**European Patent Office**

**Office européen des brevets**

(11) Veröffentlichungsnummer: **0 295 315 B1**

# EUROPÄISCHE PATENTSCHRIFT

(45) Veröffentlichungstag der Patentschrift: **27.03.91**

(51) Int. Cl.⁵: **B23B 31/02**

(21) Anmeldenummer: **87108662.5**

(22) Anmeldetag: **16.06.87**

(54) **Werkzeugkupplung.**

(43) Veröffentlichungstag der Anmeldung:
**21.12.88 Patentblatt 88/51**

(45) Bekanntmachung des Hinweises auf die
Patenterteilung:
**27.03.91 Patentblatt 91/13**

(84) Benannte Vertragsstaaten:
**CH DE FR GB IT LI**

(56) Entgegenhaltungen:
**DE-C- 3 108 439**
**FR-A- 1 275 519**
**GB-A- 846 828**
**US-A- 2 485 799**
**US-A- 2 684 249**

(73) Patentinhaber: **Fried. Krupp Gesellschaft mit
beschränkter Haftung
Altendorfer Strasse 103
W-4300 Essen 1(DE)**

(72) Erfinder: **von Haas, Rainer
Krümmelstrasse 26
W-2054 Geesthacht(DE)**

(74) Vertreter: **Vomberg, Friedhelm, Dipl.-Phys.
Schulstrasse 8
W-5650 Solingen 1(DE)**

## Beschreibung

Die Erfindung betrifft eine Spannvorrichtung gemäß dem oberbegriff des Anspruchs 1. Eine Solche vorrichtung ist aus DE-C 3108439 bekannt.

Bestandteil der spanenden Fertigung ist in vielen Fällen ein modular aufgebautes Werkzeugsystem, bei dem der schneidentragende Teil durch eine geeignete Kupplung von dem Werkzeugträger (Spindel oder Revolver), eventuell auch über Adapter und Reduzierungen, getrennt ist. Diese Kupplungsstellen sind häufig als Zylinder mit Plananlage oder als Kegel ausgebildet. Die Kupplungsstellen, die mit einem oder mehreren Kegeln versehen sind, können selbsthemmend sein und Zylinder mit Plananlage können "verklebt" sein, so daß nicht nur beim Spannen eine Kraft, sondern auch beim Entspannen eine Kraft, aber in entgegengesetzter Richtung, erforderlich ist.

In der DE-C-31 08 439 ist ein Bohrwerkzeug beschrieben, dessen hinteres Ende einen konzentrischen, zylindrischen Paßzapfen zeigt und mit einer senkrecht zur Bohrwerkzeugachse verlaufenden Ringfläche umgeben ist. Die axiale Spannkraft wird dadurch erreicht, daß der Paßzapfen im Bereich der Halteschraube eine Querbohrung mit einem darin verschiebbaren Verbindungsbolzen aufweist, der an seinen beiden Enden den kegelförmigen Ansatz oder die kegelförmige Vertiefung aufweist, und daß koaxial zur Halteschraube diametral gegenüberliegend eine weitere radial verschraubbare Halteschraube gleichartiger Ausbildung im Werkzeughalter angeordnet ist. Beim Anziehen einer Halteschraube wird nun der Verbindungsbolzen in der Querbohrung so verschoben, bis er sich an dem gegenüberliegenden Konus der anderen Halteschraube abstützt. So wird erreicht, daß an beiden Enden des Verbindungsbolzens die gleichen Kräfte wirken. Durch die beidseitige kegelförmige Ausbildung des Verbindungsbolzens werden Axialkräfte wirksam, die ein gutes axiales Anpressen der Ringflächen am Bohrwerkzeug mit der des Werkzeughalters bewirken.

In der DE-A 35 32 891 ist eine spielfreie Kupplungsverbindung beschrieben, die aus axialer Plananlage, Kurzkegel und zylindrischem Zapfenstück besteht. Diese Kupplungsverbindung kann man mit der zuvor beschriebenen Spannart zwar spannen, aber bei selbsthemmendem Kegel mit den Halteschrauben nicht lösen.

Aufgabe der Erfindung ist es, beim Lösen der Halteschraube Axialkräfte in entgegengesetzter Richtung zu den Spannkräften zu erzeugen.

Die Erfindungsaufgabe wird im wesentlichen durch die Ausbildung der Spannelemente gelöst, wie sie im Anspruch 1 formuliert sind. Beim Herausdrehen der Halteschrauben drückt der rückwärtige Kegel der Schraubenköpfe gegen die kegelförmige Oberkragung und erzeugt so axiale Ausdruckkräfte, die entgegengesetzt der Spannkräfte wirken.

Der Vorteil der Erfindung liegt darin, daß es nun möglich ist, mit den Halteschrauben beim Hineindrehen axiale Spannkräfte, und beim Herausdrehen axiale Ausdruckkräfte zu erzeugen, die entgegengesetzt der Spannkräfte wirken. Dadurch ist es möglich, z.B. alle selbsthemmenden Kegelverbindungen oder festhaftenden Zylinderverbindungen zu spannen und zu lösen.

Ausführungsbeispiele der Erfindung sind in den schematischen Zeichnungen dargestellt. Es zeigen

Fig. 1    eine Spannvorrichtung mit einem Spannstück in einer Querbohrung des Paßzapfens,

Fig. 2    eine Spannvorrichtung mit einem Spannstück als T-Stück im Paßzapfen im gelösten Zustand,

Fig. 3    eine Spannvorrichtung mit einem Spannstück als T-Stück im Paßzapfen im gespannten Zustand, und

Fig. 4    Querschnitt nach Linie IV-IV in Fig. 2.

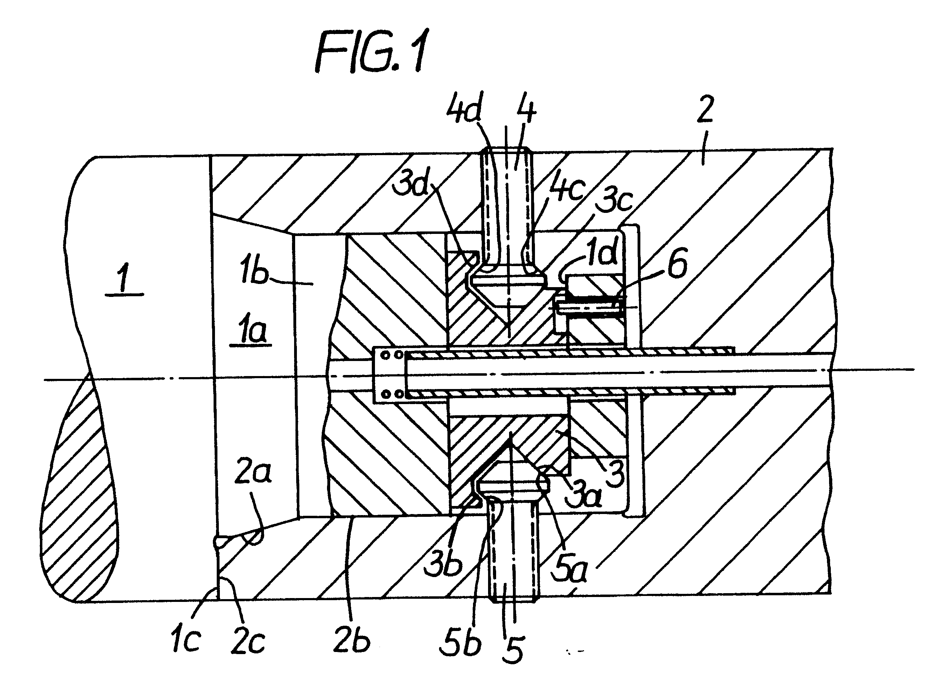

In Fig. 1 ist ein Werkzeugkopf 1 mit einer Planlage 1c und mit einem Paßzapfen, bestehend aus einem Kurzkegel 1a und einem Zylinderteil 1b und ein Werkzeughalter 2 mit einer Plananlage 2c und einer Aufnahmebohrung, bestehend aus einer Kegelbohrung 2a und einer Zylinderbohrung 2b, dargestellt. Der Zylinderteil 1b weist eine Querbohrung 1d auf, in der ein Spannstück 3 sich in Querrichtung begrenzt durch den Sicherungsstift 6 bewegen kann. Das Verdrehen des Spannstücks 3 wird ebenfalls durch den Sicherungsstift 6 verhindert.

Zum Spannen und Lösen sind die Kegelschrauben 4 und 5 quer zur Mittelachse so angeordnet, daß sie bei Anzug über die Kegelflächen 5a/3a und 4c/3c, Spannstück 3, Zylinderteil 1b und Kurzkegelteil 1a die Plananlage zwischen 1c und 2c bewirken. Beim Lösen der Kegelschraube 4 bewegt sich auch der Kegelbund 4d radial nach außen und drückt nun gegen die Kegelfläche 3d und zieht das Spannstück 3 mit der Kegelfläche 3b gegen den Kegel 5b. Nun treten, abhängig von der Kegelneigung und der Zugkraft der Kegelschraube 4, an den Kegelflächen 3d und 3b je gleich große Axialkräfte auf, die den Werkzeugkopf 1 mit seinem Kurzkegel 1a aus dem Gegenstück 2a drücken. Nach völligem Lösen der Kegelschraube 4 kann dann der Werkzeugkopf 1 aus dem Werkzeughalter 2 axial herausgezogen werden.

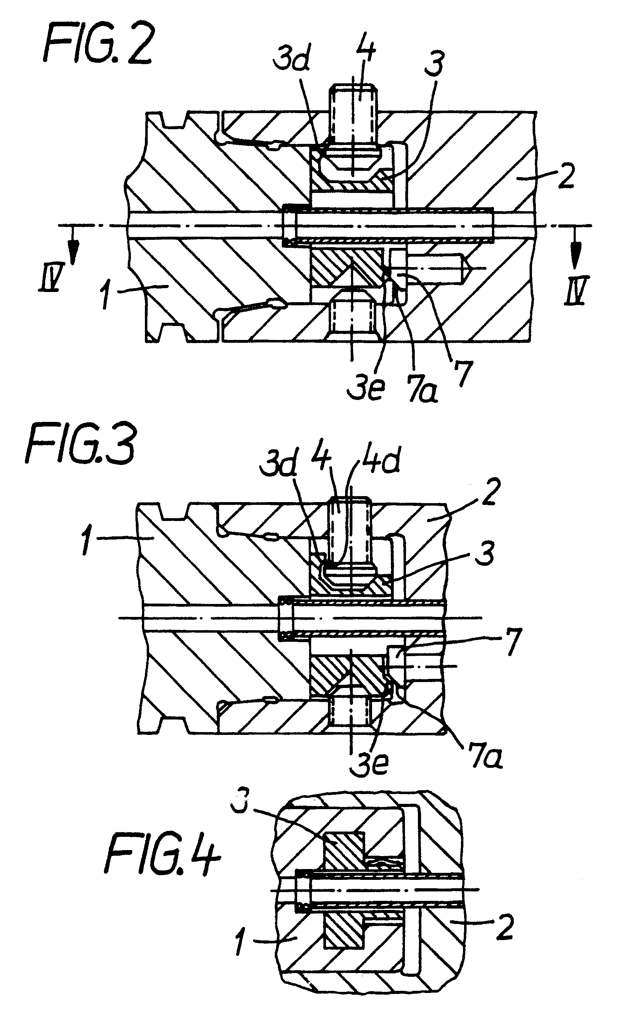

In Fig. 2 ist eine Kupplung dargestellt, in der das Spannstück 3 in T-Form ausgebildet ist. Der Lösemechanismus ist der gleiche wie in Fig. 1. Beim Lösen der Kegelschraube 4 drückt der Kegel 4d gegen die Kegelfläche 3d und zieht das Spannstück 3 mit seiner Neigungsfläche 3e gegen die Neigungsfläche 7a des Anschlagbolzens 7. Die Halteschraube 5 hat in diesem Fall nur einen einfachen kegeligen Kopf.

## Ansprüche

1. Spannvorrichtung in einer Werkzeugkupplung mit Paßzapfen (1a, 1b) und Aufnahmebohrung (2b), bestehend aus einem Spannstück (3), das sich im Paßzapfen (1a, 1b) befindet, durch zwei Halteschrauben (4, 5) in der Aufnahmebohrung (1d) gespannt wird, senkrecht zur Achse des Zapfens (1a, 1b) begrenzt beweglich ist und in Bewegungsrichtung diametral gegenüberliegend zwei kegelförmige Aufnahmebohrungen aufweist, wobei sich die Halteschrauben (4, 5) in Höhe der Aufnahmebohrungen des Spannstückes (3) befinden,
   **dadurch gekennzeichnet,**
   daß mindestens eine der kegelförmigen Aufnahmebohrungen zu einem Teil, und zwar entgegengesetzt zum Zapfenende kegelförmig (Kegelflächen 3b, 3d) überkragt wird und die Halteschrauben (4, 5) doppelkegelförmige Köpfe passend zu den Aufnahmebohrungen am Spannstück haben.

2. Spannvorrichtung nach Anspruch 1, dadurch gekennzeichnet, daß das Spannstück (3) sich in einer Querbohrung (1d) des Paßzapfens (1a, 1b) befindet und durch eine Halteschraube (6) im Zapfen gehalten wird.

3. Spannvorrichtung nach Anspruch 1, dadurch gekennzeichnet, daß das Spannstück (3) die Form eines T-Stücks hat.

4. Spannvorrichtung nach Anspruch 1, dadurch gekennzeichnet, daß eine Spannschraube (4, 5) nur einen kegelförmigen Kopf hat und die entsprechende Aufnahmebohrung am Spannstück (3) kegelförmig ohne Überkragung ist.

## Claims

1. A clamping device in a tool coupling having fitting pins (1a, 1b) and a receiving bore (2b), comprising a clamping member (3) which is located in the fitting pin (1a, 1b), is clamped in the receiving bore (1d) by two retaining screws (4, 5), can move to a limited extent perpendicularly of the axis of the pin (1a, 1b) and has two conical receiving bores diametrically opposite in the direction of movement, the retaining screws (4, 5) being located at the level of the receiving bores of the clamping member (3), characterized in that at least one of the conical receiving bores is partly overhung conically (conical faces (3b, 3d)) oppositely to the pin end, and the retaining screws (4, 5) have double conical heads matching with the receiving bores of the clamping member.

2. A clamping device according to claim 1, characterized in that the clamping member (3) is located in a transverse bore (1d) of the fitting pin (1a, 1b) and is retained in the pin by a retaining screw (6).

3. A clamping device according to claim 1, characterized in that the clamping member (3) has the form of a T-iron.

4. A clamping device according to claim 1, characterized in that one clamping screw (4, 5) has only one conical head and the corresponding receiving bore of the clamping member (3) is conical without overhang.

## Revendications

1. Dispositif de serrage dans un accouplement d'outil, comportant un tourillon d'ajustement (1a, 1b) et un alésage de positionnement (2b), et constitué d'un organe de serrage (3), qui se trouve dans le tourillon d'ajustement (1a, 1b), qui est mis en serrage au moyen de deux vis de maintien (4, 5) dans l'alésage de positionnement (1d), qui peut se déplacer de façon limitée, perpendiculairement à l'axe du tourillon (1a, 1b), et qui présente, dans la direction du déplacement, diamétralement opposées, deux vis de maintien à cônes (4, 5), étant entendu que les deux vis de maintien (4, 5) se trouvent à la hauteur des alésages de positionnement de l'organe de serrage (3),
   caractérisé en ce qu'
   au moins l'un des alésages de positionnement présente une saillie conique pour une partie, précisément faisant face à l'extrémité du tourillon (surfaces coniques 3b, 3d), et en ce que les vis de maintien (4, 5) possèdent des têtes en forme de double cône adaptées aux alésages de positionnement sur l'organe de serrage.

2. Dispositif de serrage suivant la revendication 1, caractérisé en ce que l'organe de serrage (3) se trouve dans un alésage transversal (1d) du tourillon d'ajustement (1b, 1c) et est maintenu dans le tourillon au moyen d'une vis de maintien (6).

3. Dispositif de serrage suivant la revendication 1, caractérisé en ce que l'organe de serrage (3) a la forme d'une pièce en T.

4. Dispositif de serrage suivant la revendication 1, caractérisé en ce qu'une vis à cônes (4, 5) possède seulement une simple tête conique et que l'alésage de positionnement sur l'organe de serrage (3) a une forme conique, sans collet.

FIG.1

EP 0 295 315 B1

FIG.2

3d  4  3

2

IV  IV

1

3e  7a  7

FIG.3

3d  4  4d

2

1

3

7

7a

3e

FIG.4

3

1  2